Europäisches Patentamt

European Patent Office

Office européen des brevets

(11) Veröffentlichungsnummer: **0 471 074 A1**

## EUROPÄISCHE PATENTANMELDUNG
### veröffentlicht nach Art. 158 Abs. 3 EPÜ

(21) Anmeldenummer: 90913574.1

(22) Anmeldetag: **05.01.90**

(86) Internationale Anmeldenummer:
**PCT/SU90/00002**

(87) Internationale Veröffentlichungsnummer:
**WO 91/10125 (11.07.91 91/15)**

(51) Int. Cl.⁵: **G01N 21/53**

(43) Veröffentlichungstag der Anmeldung:
**19.02.92 Patentblatt 92/08**

(84) Benannte Vertragsstaaten:
**BE DE FR SE**

(71) Anmelder: **SREDNEAZIATSKY NAUCHNO-ISSLEDOVATELSKY I PROEKTNY INSTITUT TSVETNOI METTALLURGII ul. Pushkina, 59**
**Tashkent, 700000(SU)**

(72) Erfinder: **MARTYNOV, Nikolai Vasilievich massiv Junus-Abad, kvartal 18/16-95 Tashkent, 700114(SU)**

(74) Vertreter: **Patentanwälte Zellentin & Partner Zweibrückenstrasse 15 W-8000 München 2(DE)**

(54) EINRICHTUNG ZUR MESSUNG DER OPTISCHEN DICHTE VON GASEN.

(57) Die Erfindung betrifft die Kontrolle von Stoffen nach optischem Verfahren.

Die Einrichtung enthält ein Gehäuse (1), in dem in einer optischen Achse (2) ein Lichtstrahler (3), ein Meßraum (4) und ein Fotoempfänger (5) angeordnet sind, an dessen Ausgang in Riehenschaltung ein Verstärker (6), ein logarithmischer Umwandler (7) und ein Registriergerät (9) angeschlossen sind. Erfindungsgemäß enthält der logarithmische Umwand-ler (7) einen Schalter (10), mit dessen Ausgang der Eingang eines Differentialkomparators (11) verbunden ist, sowie einen parallelen RC-Kreis (12), der zwischen der Nullpotentialleitung und dem Ausgang des Schalters (10) liegt.

Die Erfindung kann zur Bestimmung der Rauchdichte in Abgasen von Kraftfahrzeugen verwendet werden.

FIG.1

## Technisches Gebiet

Die vorliegende Erfindung betrifft die Kontrolle von Stoffen nach optischen Methoden und bezieht sich insbesondere auf eine Einrichtung zur Messung der optischen Dichte von Gasen.

## Stand der Technik

Es ist eine Einrichtung zur Messung der optischen Dichte von Gasen bekannt (UdSSR, "Tragbares Meßgerät ИHA-109 zur Messung der Undurchsichtigkeit von Fahrzeugabgasen", Kennkarte 2.850.260. ПC), welche ein Gehäuse enthält, in dem auf einer optischen Achse ein Lichtstrahler, eine Meß-Durchströmkammer und ein Fotoempfänger angeordnet sind, an dessen Ausgang in Reihenschaltung ein Verstärker , ein logarithmischer Umwandler in Form eines Analog-Digital-Umsetzers, ein peripherer Paralleladapter und ein Zentralprozessor angeschlossen sind. Mit dem Ausgang des logarithmischen Umwandlers steht ein Registriergerät in Verbindung. Die Umwandlung eines analytischen Signals zu Einheiten der optischen Dichte beruht bei der bekannten Einrichtung auf der Umsetzung eines analogen Signals in ein digitales Äquivalent und auf dessen Logarithmierung mit Hilfe von digitalen Einrichtungen. Diese digitalen Einrichtungen zeichnen sich durch eine erhebliche Kompliziertheit und einen großen Elektroenergieaufwand aus, was keine Möglichkeit gibt, die Einrichtung als kompaktes Gerät mit unabhängiger Stromversorgung auszubilden.

Am nächsten kommt der vorliegenden Erfindung nach dem technischen Wesen eine Einrichtung zur Messung der optischen Dichte von Gasen (Ungarn, Elektroimpex, "Rauchdichtemesser DFM-2"), welche ein Gehäuse enthält, in dem auf einer optischen Achse ein Strahler, ein Meßraum, der für das Durchströmen zu analysierender Gase quer zur optischen Achse vorgerichtet ist, und ein Fotoempfänger angeordnet sind, an dessen Ausgang in Hintereinanderschaltung ein Verstärker , ein logarithmischer Umwandler , dessen zweiter Eingang an eine Bezugsspannungsquelle gelegt ist, und ein Registriergerät angeschlossen sind.

Der logarithmische Umwandler übernimmt die Logarithmierung eines analytischen Impulssignals.

Der logarithmische Umwandler ist nach der Differentialschaltung auf der Basis von zwei Operationsverstärkern mit pn-Übergängen in Gegenkopplungskreisen aufgebaut.

Das Vorhandensein von Bauelementen mit pn-Übergängen im Differentialwandler führt zu einer beträchtlichen Abhängigkeit der Parameter der Funktionscharakteristik des logarithmischen Umwandlers von der Umgebungstemperatur sowie zu einer zeitlichen Instabilität.

Darüber hinaus wird durch Vorhandensein eines pn-Überganges bei der Analyse von Gasen im Bereich beträchtlicher optischer Dichten der Bereich der verzerrungsfreien Signallogarithmierung begrenzt. All dies setzt die Arbeitsgenauigkeit und die Betriebssicherheit der Einrichtung herab.

## Offenbarung der Erfindung

Der Erfindung liegt die Aufgabe zugrunde, ein Einrichtung zur Messung der optischen Dichte von Gasen mit einem solchen logarithmischen Umwandler zu schaffen, der die Logarithmierung eines analytischen Signals zur Bestimmung der optischen Dichte von Gasen in einem weiten Meßbereich höchst genau vornimmt und eine hohe Temperatur- und zeitliche Stabilität der Umwandlungscharakteristiken aufweist.

Die gestellte Aufgabe wird dadurch gelöst, daß in einer Einrichtung zur Messung der optischen Dichte von Gasen, die ein Gehäuse enthält, in dem auf einer optischen Achse ein Strahler, ein Meßraum, der für das Dürchströmen zu analysierender Gase quer zur optischen Achse vorgerichtet ist, und ein Fotoempfänger angeordnet sind, an dessen Ausgang in Reihenschaltung ein Verstärker , ein logarithmischer Umwandler , dessen zweiter Eingang an eine Bezugsspannungsquelle angeschlossen ist, und ein Registriergerät gelegt sind, gemäß der Erfindung der logarithmische Umwandler einen Schalter, einen Differentialspannungskomparator, dessen invertierender Eingang am Ausgang des Schalters liegt, und einen parallelen RC-Kreis enthält, der zwischen der Nullpotentialschiene und dem Ausgang des Schalters geschaltet ist, wobei der Eingang des Schalters als erster Eingang des logarithmischen Umwandlers dient, der nichtinvertierende Eingang des Differentialspannungskomparators den zweiten Eingang des logarithmischen Umwandlers bildet, und der Ausgang des Differentialspannungskomparators als Ausgang des logarithmischen Umwandlers fungiert.

Bei der erfindungsgemäßen Einrichtung zur Messung der optischen Dichte von Gasen wird dank hoher Temperatur- und zeitlicher Stabilität der zum logarithmischen Umwandler gehörenden Bauelemente die Meßgenauigkeit der optischen Dichte von Gasen in einem weiten Temperaturbereich innerhalb einer langen Zeit erhöht.

Außerdem wird dadurch, daß das Exponentialgesetz der am Kondensator des RC-Kreises auftretenden Spannungsänderung in einem breiten Änderungsbereich des Eingangssignals nicht verletzt wird, die Logarithmierung mit einer gleichen Genauigkeit bei großen Signalamplituden, die einer kleinen optischen Dichte von Gasen entsprechen, und bei geringen Signalamplituden, die fest der Totalabsorption des Lichtstromes durch undurchsichtige Teilchen des zu analysierenden Gases entsprechen, vorgenommen.

Im folgenden wird die Erfindung an Hand einer das Erfindungswesen nicht begrenzenden Ausführungsform unter Bezugnahme auf Zeichnungen näher erläutert.

Es zeigt:

Fig. 1 ein Strukturschaltbild der erfindungsgemäßen Einrichtung zur Messung der optischen Dichte von Gasen;

Fig. 2a,b Signalverläufe in verschiedenen Punkten des Strukturschaltbildes der erfindungsgemäßen Einrichtung, wobei nach der Abszissenachse Werte der laufenden Zeit t und nach der Ordinatenachse Spannungsamplituden U aufgetragen sind;

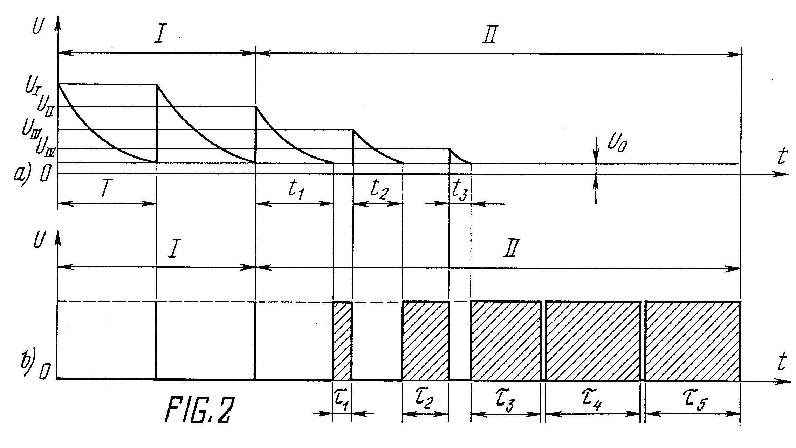

Insbesondere stellt Fig. 2a einen Spannungsverlauf am Ausgang des Schalters dar, während

Fig. 2b einen Spannungsverlauf am Ausgang des Spannungskomparators zeigt.

Ausführungsform der Erfindung

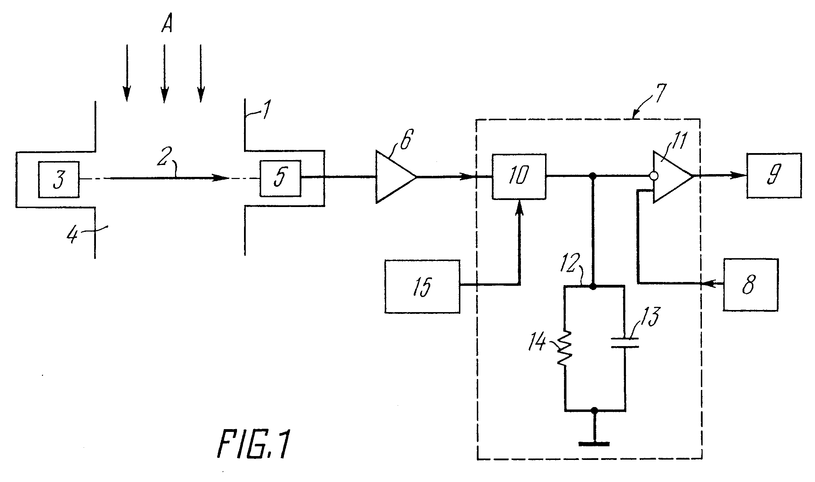

Die Einrichtung zur Messung der optischen Dichte von Gasen, welche in Fig. 1 dargestellt ist, enthält ein Gehäuse 1, in dem auf einer optischen Achse 2 ein Lichtstrahler 3, ein Meßraum 4, der durch die Wände des Gehäuses 1 begrenzt ist und eine Eintritts- und eine Austrittsöffnung aufweist, durch die ein Strom A zu analysierender Gase durch diesen Meßraum quer zur optischen Achse 2 strömen kann. Weiter ist- in Strahlrichtung gesehen- auf der optischen Achse 2 ein Fotoempfänger 5 angebracht. An den Fotoempfänger 5 ist in Reihe der Eingang eines Verstärkers 6 geschaltet, während mit dem Ausgang des Verstärkers 6 der erste Eingang eines logarithmischen Umwandlers 7 verbunden ist. Der logarithmische Umwandler 7 weist einen zweiten Eingang auf, der mit einer Bezugsspannungsquelle 8 in Verbindung steht. Weiterhin ist an den Ausgang des logarithmischen Umwandlers 7 ein Registriergerät 9, z.B. ein Zeigeranzeigegerät angeschlossen.

Der logarithmische Umwandler 7 enthält einen Schalter 10 und einen Differentialspannungskomparator 11 sowie einen parallelen RC-Kreis 12, der aus einem Kondensator 13 und einem Widerstand 14 besteht und zwischen der Nullpotentialschiene und dem Ausgang des Schalters 10 geschaltet ist.

Der Ausgang des Schalters 10 ist an den invertierenden Eingang des Differentialspannungskomparators 11 angeschlossen, und die Bezugsspannungsquelle 8 ist mit dem nichtinvertierenden Eingang des Differentialspannungskomparators 11 verbunden, welcher als zweiter Eingang des logarithmischen Umwandlers 7 dient.

Dabei ist der erste Eingang des logarithmischen Umwandlers 7 durch den Eingang des Schalters 10, der Ausgang aber durch den Ausgang des Differentialspannungskomparators 11 gebildet.

Bei der vorliegenden Ausführungsform der Einrichtung ist als Schalter 10 ein Feldeffekttransistor benutzt, an dessen Steuereingang ein Impulsgenerator 15, wie es in Fig. 1 gezeigt ist, mit einer Impulsfolgeperiode T, angeschlossen ist. Jedoch ist eine Ausführungsform der erfindungsgemäßen Einrichtung möglich, bei der der Impulsgenerator 15 unmittelbar an den Eingang des Lichtstrählers 3 angeschlossen ist (diese Ausführungsform ist nicht dargestellt).

Die in Fig. 1 gezeigte Einrichtung zur Messung der optischen Dichte von Gasen funktioniert wie folgt. Bei Einschaltung der Einrichtung durchdringt der Lichtstrom des Lichtstrahlers 3, als welcher z.B. eine Leuchtdiode verwendet werden kann, den Meßraum 4 (zu diesem Zeitpunkt gibt es im Meßraum 4 kein zu analysierendes Gas). Der Lichtstrom wird vom Fotoempfänger 5 aufgenommen und in ein entsprechendes elektrisches Signal umgewandelt, das danach durch den Verstärker 6 verstärkt wird. Das verstärkte Signal wird im Augenblick, wo der Schalter 10 geschlossen ist, dem Eingang des parallelen RC-Kreises 12 mit einer Schwingungsperiode T des Generators 15 (Fig.2a, Abschnitt I) zugeleitet und lädt den Kondensator 13 des RC-Kreises 12 auf eine Amplitude auf, die der Spannung $U_l$ des analytischen Signals am Ausgang des Schalters 10 entspricht.

Bei der Ausführungsform der erfindungsgemäßen Einrichtung, bei welcher der Impulsgenerator 15 an den Eingang des Lichtstrahlers 3 angeschlossen ist, nimmt der Fotoempfänger 5 Lichtstromimpulse wahr, welche in zugehörige elektrische Impulse verwandelt werden, die denn durch den Verstärker 6 verstärkt und dem ersten invertierenden Eingang des logarithmischen Umwandlers 7 zugeführt werden. Dabei erweist es sich als ausreichend, als Schalter 10 eine Halbleiterdiode zu benutzen, die im RC-Schaltkreis 12 ein System Ladung-Entladung erzeugt. Bei Auftreten eines Impulses am Eingang des logarithmischen Umwandlers 7 wird der Kondensator 13 des RC-Kreises 12 geladen und dann in den Impulspausen über den Widerstand 14 entladen, weil der als Diode ausgebildete Schalter 10 durch die Sperrspannung dann gesperrt wird, wenn die Impulse ausbleiben.

Zu dem Zeitpunkt, in dem die Steuerimpulse zur Eingang des Schalters 10 kommen und dieser ausgeschaltet ist, fällt die Spannung $U_l$ am Kondensator 13 nach dem Exponentialgesetz infolge der Entladung des Kondensators 13 über den Widerstand 14 ab.

Wie aus dem Diagramm (Fig. 2a, Abschnitt I) zu ersehen ist, ist die Entladezeit praktisch gleich der Impulsfolgeperiode T des Generators 15, was durch geeignete Bemessung der Nennwerte der Elemente des RC-Kreises 12 gewährleistet ist.

Die exponentialen Impulse des RC-Kreises 12 werden vom Spannungskomparator 11 mit dem Bezugsspannungspegel $U_o$ der Bezugsspannungsquelle 8 verglichen, die mit dem zweiten nichtinvertierenden Eingang des Spannungskomparators 11 verbunden ist. Durch Vergleich der Signale werden am Ausgang des Komparators 11 Impulse (Fig. 2b, Abschnitt I) gebildet, deren Dauer gleich der Differenz zwischen der Impulsfolgeperiode T und der Entladezeit des Kondensators 13 des RC-Kreises 12 auf die Höhe der Bezugsspannung $U_o$ ist. Die Bezugsspannung $U_o$ wählt man so, daß am Ausgang des 11 Komparators kurze Impulse erscheinen oder das vollständige Ausbleiben derselben (niedriger Pegel des Signals am Ausgang des Komparators 11) zustande kommt.

Dann ordnet man das Gehäuse 1 im Strom des zu analysierenden Gases so an,daß die Bewegungsrichtung des Gasstroms ungefähr perpendikulär zur optischen Achse 2 ist.

Der Lichtstrahler 3 sendet einen Lichtstrom aus, der den Meßraum 4 durchdringt. Die Anwesenheit von undurchsichtigen Staub-, Rußteilchen und anderen undurchsichtigen Komponenten im zu analysierenden Gas ruft eine teilweise Absorption des Lichtstroms hervor. Dadurch wird vom Fotoempfänger 5 ein Lichtstrom verminderter Intensität wahrgenommen, der in ein entsprechendes Signal umgewandelt wird, das der Amplitude nach geringer als das Ursprungssignal ist. Dieses vom Verstärker 6 verstärkte Signal wird über den Schalter 10 für eine kurze Zeit dem Eingang des parallelen RC-Kreises 12 zugeleitet und lädt den Kondensator 13 des RC-Kreises 12 auf eine Amplitude auf, die einer Spannung $U_{II}$ (Fig. 2a, Abschnitt II) des vom Fotoempfänger 6 eingetroffenen Signals entspricht, welche kleiner als $U_I$ ist, d.h. $U_{II} < U_I$.

In der Pause zwischen den Steuerimpulsen des Generators 15 ändert sich die Spannung am Kondensator 13 nach dem Exponentialgesetz innerhalb der Entladezeit $t_1$ durch das Entladen des Kondensators 13 über den Widerstand 14 des RC-Kreises 12.

Die exponential abfallenden Impulse des RC-Kreises 12 werden durch den Spannungskomparator 11 mit dem Bezugsspannungspegel $U_o$ der Bezugsspannungsquelle 8 verglichen, die mit dem zweiten nichtinvertierenden Eingang des Differentialspannungskomparators 11 verbunden ist. Durch Vergleich der Signale werden am Ausgang des Spannungskomparators 11 positive Impulse (Fig. 2b, Abschnitt II) gebildet, deren Dauer $\tau_1$ der Differenz zwischen der Impulsfolgeperiode T und der Entladezeit $t_1$ des RC-Kreises 12 ($\tau_1 = T-t_1$) entspricht.

Dabei ist die Dauer $\tau_1$ proportional dem Logarithmus der Amplitude eines analytischen Sygnals, dessen Wert direkt von der Durchsichtigkeit der Schicht des im Meßraum 4 strömenden zu analysierenden Gases abhängt, und zwar gilt:

$$\tau_n = R \cdot C \cdot \ln U_n,$$

worin bedeuten:

R = Widerstandswert des Widerstandes 14, Ohm,
C = Kapazität des Kondensators 13, F,
$U_n$ = Spannung (Amplitude) eines entsprechenden n-ten Impulses, V.

Auf solche Weise wird am Ausgang des Spannungskomparators 12 (Fig. 2b, Abschnitt II) eine Folge von n Impulsen mit einer variablen Dauer $\tau_n$ gebildet, die der optischen Dichte der Gase proportional ist, die in den Meßraum 4 gelangen.

Mit der Zunahme der optischen Dichte der zu analysierenden Gase wird die Spannung $U_{III}, U_{IV}$, auf die der Kondensator 13 aufgeladen wird, die der Signalamplitude des Fotoempfängers 5 entspricht, so lange herabgesetzt, bis sie der Spannung $U_o$ der Bezugsspannungsquelle 8 (Fig.2b, Abschnitt II) gleich wird. Hierbei wird am Ausgang des Komparators 11 die Impulsdauer $\tau_n$ entsprechend vergrößert und erreicht bei maximaler Rauchdichte T, d.h. $\tau_{max} = T$.

Die Impulsfolge vom Ausgang des logarithmischen Umwandlers 7 kommt am Eingang des Registriergeräts 9 an und wird in Einheiten der optischen Dichte nach einem bekannten beliebigen Verfahren abgebildet. Beispielsweise kann als Registriergerät 9 ein magnetelektrisches Zeigeranzeigegerät angewendet werden, da eine Spulenauslenkung im Gerät proportional dem Effektivwert des Impulsstroms, d.h. proportional der Impulsdauer ist. Bei einer anderen Ausführungsform kann das Registriergerät 9 in Form einer Kombination eines zusätzlichen Zählimpulsgenerators, eines UND-Gliedes und eines Zählers ausgeführt werden. Eine Impulsfolge vom Ausgang des Komparators 11 trifft am ersten Eingang des UND-Gliedes ein, wobei die Zählimpulse dem zweiten Eingang des UND-Gliedes zugeführt werden. Vom Ausgang des UND-Gliedes werden die Impulse auf den Zähler übertragen, in dem sie innerhalb einer bestimmten Zeitspanne summiert und auf einem digitalen Bildschirmgerät in Einheiten der optischen Gasdichte abgebildet werden.

Der Pegel der Bezugsspannung $U_o$ wird bei der erfindungsgemäßen Einrichtung beim Fehlen des zu analysierenden Gases im Meßraum 4 derart eingestellt, daß die Entladezeit $t_n$,während der Kondensator 13 auf die Höhe der Bezugsspannung $U_o$ entladen wird, maximal an die Impulsfolgeperiode T des Impulsgenerators 15 angenähert ist. Dabei soll am Ausgang des Komparators 11 der niedrige Spannungspegel liegen, der der Lage des O-Pegels entspricht. Eine Herabsetzung der Amplitude des verstärkten Signals am Ausgang des Fotoempfängers 5, welche durch eine Absorption der Strahlung im Meßraum 4 hervorgerufen ist, führt zur Verkürzung der Entladezeit $t_n$ des Kondensators 13 des RC-Kreises 12 und dazu, daß am Ausgang des Komparators 11 der hohe Pegel für eine Zeit $\tau_n$ erscheint, die der Differenz zwischen der Impulsfolgeperiode T des Generators 14 und der Entladezeit $t_n$ des Kondensators 13 gleich ist.

Die erfindungsgemäße Einrichtung zur Messung der optischen Dichte von Gasen kennzeichnet sich durch eine hohe Meßgenauigkeit, weil durch die Einstellung des Pegels der Bezugsspannung $U_o$, der dem O-Pegel am Eingang des Registriergeräts 9 entspricht, die Charakteristiken der Einrichtung (Empfindlichkeit, Umwandlungscharakteristiken) sogar bei einer Änderung der Anfangsintensität des Lichtstroms des Strahlers 3 in weiten Grenzen, welche durch den Niederschlag von undurchsichtigen Komponenten eines Gases auf die Arbeitsflächen der optischen Elemente bedingt ist, dank der Wiederherstellung der Verhältnisse zwischen den Pegeln des analytischen Signals $U_n$ und dem Bezugsspannungspegel $U_o$ völlig wiederhergestellt werden, was die Arbeit mit der Einrichtung bei der Messung der optischen Dichte von Fahrzeugabgasen bedeutend vereinfacht.

Die Parameter der Schaltungsanordnung, welche die logarithmische Kennlinie der Einrichtung bestimmen und zu denen die Kennwerte des RC-Kreises 12, die Frequenz des Impulsgenerators 15, die Höhe der Bezugsspannung $U_o$ gehören, weisen eine hohe zeitliche und Temperaturstabilität auf.

Die durchgeführten Untersuchungen der Einrichtung zur Messung der optischen Dichte von Gasen haben bestätigt, daß die Ausgangsskala des Registriergeräts eine hohe Linearität bei exponentialer Verminderung der Amplitude der Impulse am Eingang des logarithmischen Umwandlers 7 besitzt. Der Verlauf der logarithmischen Kennlinie wird nicht gestört, wenn die Amplitude der Impulse praktisch auf Kull vermindert wird, was der Totalabsorption der Strahlung im Meßraum 4 entspricht. Die Untersuchungen der erfindungsgemäßen Einrichtung haben bei der Bestimmung von Abgasen in Dieselfahrzeugen eine erhöhte Stabilität der metrologischen Charakteristiken der Einrichtung und einen erhöhten Betriebskomfort gezeigt.

Gewerbliche Verwertbarkeit

Die Erfindung kann in der Kraftfahrzeugindustrie, in dar chemischen, metallurgischen, Brennstoffindustrie und in anderen Industriezweigen zur Messung der Rauchdichte, des Staubgehaltes von Gasen, die in die Atmosphäre gelangen, verwendet werden.

Bevorzugt ist die Anwendung der Erfindung zur Bestimmung der Rauchdichte in Abgasen von Dieselfahrzeugen.

**Patentansprüche**

1. Einrichtung zur Messung der optischen Dichte von Gasen, die ein Gehäuse (1) enthält, in dem auf einer optischen Achse ein Lichtstrahler (3), ein Meßraum (4), der für das Durchströmen zu analysierender Gase durch denselben quer zur optischen Achse (2) vorgerichtet ist, und ein Fotoempfänger (5) angeordnet sind, an dessen Ausgang in Reihenschaltung ein Verstärker (6), ein logarithmischer Umwandler (7), dessen zweiter Eingang an eine Bezugsspannungsquelle (8) angeschlossen ist, und ein Registriergerät (9) gelegt sind, dadurch **gekennzeichnet**, daß der logarithmische Umwandler (7) einen Schalter (10), einen Differentialspannungskomparator (11), dessen invertierender Eingang am Ausgang des Schalters (10) liegt, und einen parallelen RC-Kreis (12) enthält, der zwischen der Nullpotentialschiene und dem Ausgang des Schalters (10) geschaltet ist, wobei der Eingang des Schalters (10) als erster Eingang des logarithmischen Umwandlers (7) dient, der nichtinvertierende Eingang des Differentialspannungskomparators (11) den zweiten Eingang des logarithmischen Umwandlers (7) bildet, und der Ausgang des Differentialspannungskomparators (11) als Ausgang des logarithmischen Umwandlers (7) fungiert.

FIG.1

FIG.2

## INTERNATIONAL SEARCH REPORT

International Application No PCT/SU 90/00002

**I. CLASSIFICATION OF SUBJECT MATTER** (If several classification symbols apply, indicate all) ⁶

According to International Patent Classification (IPC) or to both National Classification and IPC

IPC⁵:     G 01 N 21/53

**II. FIELDS SEARCHED**

| Minimum Documentation Searched ⁷ | |
|---|---|
| Classification System | Classification Symbols |
| IPC⁵: | G 01 N 21/53, G 01 J 1/44 |

| Documentation Searched other than Minimum Documentation<br>to the Extent that such Documents are Included in the Fields Searched ⁸ |
|---|
| |

**III. DOCUMENTS CONSIDERED TO BE RELEVANT** ⁹

| Category ⁰ | Citation of Document, ¹¹ with indication, where appropriate, of the relevant passages ¹² | Relevant to Claim No. ¹³ |
|---|---|---|
| A | SU, A1, 1402863 (Nauchno-issledovatelsky institut prikladnykh fizicheskikh problem im. A.N. Sevchenko) 15 June 1988, the description, figures 1,2 | 1 |
| A | SU, A1, 1203409 (E.D. Pembek), 7 January 1986, the description, the drawing | 1 |
| A | GB, A, 2052732 (HONEYWELL INC.) 28 January 1981, the abstract, figures 1-5 | 1 |
| A | US, A, 4544273 (PARTICULATE INSTRUMENTS), 1 October 1985, the abstract, figures 2,5,5a,5b | 1 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19 July 1990 (19.07.90) | 14 December 1990 (14.12.90) |
| International Searching Authority | Signature of Authorized Officer |
| ISA/SU | |

Form PCT/ISA/210 (second sheet) (January 1985)